# DEMANDE DE BREVET EUROPEEN

(11) **EP 1 544 584 A1**
(43) Date de publication de la demande: **22.06.2005**
(21) Numéro de dépôt: 04292789.7
(22) Date de dépôt: 26.11.2004
(51) Int. Cl.: G01F 11/40

(54) **Procédé de distribution d'un produit à dose fixe, kit de distribution pour la mise oeuvre du procédé, ainsi que distributeur obtenu**

(30) Priorité: 19.12.2003 FR 0315109
(71) Demandeur: Buhannic, Luc, 92500 Rueil-Malmaison (FR)
(72) Inventeur: Buhannic, Luc, 92500 Rueil-Malmaison (FR)
(74) Mandataire: Schwartz, Thierry J.

(57) **Abrégé**

Les systèmes de distribution existants sont mal adaptés à la distribution de produits dont les doses sont variables suivant le poids et/ou l'âge. Il est donc important de proposer un mode de distribution de produits de traitements facilement généralisable, économique et permettant d'assurer une délivrance pratique et sûre des produits aux clients ou aux patients.

A cette fin, l'invention a pour objet un procédé de distribution de produit à dose fixe comprenant les étapes consistant à déterminer, en fonction de la concentration du produit, une mesure correspondant à la quantité de produit nécessaire pour constituer une dose prescrite, et associer au récipient un doseur apte à délivrer une mesure fixe de produit, ladite mesure étant égale à celle déterminée précédemment. Selon un mode de réalisation, un kit de mise en oeuvre du procédé comprenant un récipient (102) contenant le produit, et un doseur (104), apte à délivrer une pluralité de doses (A, B, C, D, E, F), comprend des moyens de réglage (106) pour sélectionner une dose, et des moyens de verrouillage définitif (130-132) du réglage pour que la dose choisie soit reproduite tout au long de la prescription

## Description

L'invention se rapporte à un procédé de distribution d'un produit à dose fixe quelle que soit la prescription. L'invention se rapporte aussi à un kit de distribution pour la mise en oeuvre de ce procédé, et à un distributeur obtenu par combinaison du kit.

Lorsqu'un produit de traitement tel qu'un médicament, un produit assainissant, ou un produit de nettoyage, est vendu, la responsabilité du vendeur n'est plus engagée si l'usager n'observe pas les prescriptions d'utilisation.

Par exemple, en France, la vente de médicaments en pharmacie est réalisée essentiellement suivant deux modes de distribution :
- selon le premier mode, les produits « industriels », en provenance de laboratoires pharmaceutiques, sont vendus conditionnés sous différentes formulations (liquide, sirop, poudre, gélule, comprimé, granule, etc.) et sous différents dosages pour répondre aux traitements habituels standards prescrits par les médecins. Le seul rôle du pharmacien est alors celui d'un simple vendeur. Les besoins spécifiques de certaines catégories de malades telles que les personnes âgées ou les nourrissons ne sont pas satisfaits de façon simple. Il existe en effet deux sous catégories de médicaments industriels :
   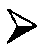 les produits à dose fixe pour « adulte », le plus souvent sous une formulation de comprimé. Ils posent un problème car ces comprimés sont identiques, par exemple, pour un homme de deux mètres pesant 130 kg et pour une femme d'un mètre cinquante pesant quarante six kilos.
   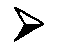 Les produits sous forme pédiatrique qui peuvent comprendre un doseur adaptable par le patient ou son entourage (mère de famille, gardien ou assistante maternelle) qui réalise lui-même la délivrance de la dose adaptée à la prescription, avec les risques que comprenne une telle manipulation par un non professionnel.
- selon le second mode, les pharmaciens préparent eux-mêmes des préparations magistrales en fonction des prescriptions ou recommandations, pour répondre à des besoins spécifiques en terme de dosage du principe actif, de composition et/ou de formulation. Le pharmacien assure donc la fabrication du produit, depuis la commande des matières premières jusqu'à la formulation et à la délivrance. C'est un processus lourd et difficilement généralisable.

Dans les pays anglo-saxons, la distribution d'un médicament repose sur une adaptation individuelle, toujours à partir de doses préétablies, du nombre de prises du médicament délivré au patient. Par exemple, pour un même médicament, un premier patient devra prendre deux doses trois fois par jour, alors qu'un autre patient devra prendre trois doses quatre fois par jour.

La multiplicité des doses entraîne souvent des erreurs de la part des patients qui parfois inversent le nombre de doses et la fréquence des prises, ou bien oublient une dose.

Une autre source d'erreur provient de l'absence d'un doseur : les patients remplacent parfois une cuillérée à café par une « petite » cuillérée à soupe approximative qui n'est généralement pas équivalente.

Ces systèmes de distribution sont donc mal adaptés à la distribution des produits dont les doses peuvent difficilement être standardisées, comme par exemple la quasi-totalité des produits à vocation pédiatrique, les antibiotiques, et les antiépileptiques dont les doses sont très variables suivant le poids et/ou l'âge.

Les inconvénients de tels systèmes sont nombreux.

Pour les laboratoires, le nombre de formulations à fabriquer et à gérer est important et pose des problèmes de diffusion aux différentes pharmacies, de gaspillage (dates de péremptions dépassées), etc.

Pour le patient, la délivrance de la bonne dose échappe aux professionnels de la santé. C'est la mère de l'enfant, le gardien, ou l'assistante maternelle de la crèche qui a la responsabilité de délivrer la bonne dose. Les risques de mauvaise compréhension, d'erreur en sous dosage ou en sur dosage sont importants.

Dans ces conditions, le pharmacien n'a qu'un rôle de vendeur, très éloigné de ce pour quoi il a été formé.

Il est donc important de proposer un mode de distribution de produits de traitements facilement généralisable, économique et permettant d'assurer une délivrance pratique et sûre des produits de traitement aux clients ou aux patients.

A cette fin, la présente invention propose de réaliser un contenant distributeur comprenant, d'une part, un réservoir de produit à un dosage minimum unique, et d'autre part un doseur apte à délivrer un volume du médicament nécessaire pour constituer une dose prescrite.

Plus précisément, l'invention a pour objet un procédé de distribution de produit à dose fixe, à partir d'un récipient contenant le produit à une concentration donnée, caractérisé en ce qu'il comprend les étapes consistant à :
a) déterminer, en fonction de la concentration du produit, une mesure correspondant à la quantité de produit nécessaire pour constituer une dose prescrite ; et
b) associer au récipient un doseur apte à délivrer une mesure fixe de produit, ladite mesure étant égale à celle déterminée à l'étape a).

La concentration du produit contenu dans le récipient a été préalablement déterminée par le fabricant dudit produit pour que un doseur pouvant être associé au récipient délivre la dose minimale qui peut être prescrite.

Dans la description détaillée ci-après de l'invention, l'expression « prescription individuelle » doit être comprise comme étant une prescription faite par un professionnel (médecin, professionnel des produits de nettoyage, professionnel des piscines, etc.) à un utilisateur particulier pour un traitement quelconque mettant en jeu un ou plusieurs produits dangereux s'ils sont mal dosés (médicament, produit sanitaire, etc.).

Le terme « mesure » désigne soit un poids, soit un volume. Ainsi, la mesure à déterminer pour constituer une dose conforme à la prescription peut être, par exemple, soit un poids de poudre, de granules ou de liquide, soit un volume de poudre, de granules, de gaz ou de liquide. Ainsi, selon le mode de réalisation de l'invention, le doseur sera volumique, c'est-à-dire qu'il sera sélectionné en fonction du volume qu'il délivre, ou il sera pondéral, c'est-à-dire qu'il sera sélectionné en fonction du poids qu'il délivre.

Un récipient ou un conteneur pré-conditionné doit être compris comme étant un récipient ou un conteneur rempli d'un produit préalablement à la livraison du récipient ou un conteneur à la personne qui met en oeuvre le procédé.

Avantageusement, le doseur est un bouchon doseur adaptable au récipient, le bouchon et le récipient étant verrouillés l'un sur l'autre.

Selon des variantes de l'invention :
- le doseur étant à mesure fixe prédéterminée, l'étape b) du procédé comprend le choix dudit doseur parmi au moins deux doseurs de mesure différentes ;
- le doseur étant à mesure réglable, l'étape b) du procédé comprend les sous-étapes consistant à :
   b') régler le doseur pour délivrer la mesure déterminée à l'étape a); et
   b") verrouiller le doseur à la mesure déterminée.

Selon un mode de réalisation préféré de l'une ou de l'autre de ces variantes, le doseur est un bouchon doseur adaptable au récipient.

Dans le cas d'un bouchon doseur à volume réglable, il peut, le cas échéant, avoir été pré-adapté au récipient, éventuellement fixé de manière définitive à celui-ci.

Le procédé peut comprendre une étape de fixation définitive dudit doseur audit récipient.

Le procédé comprend éventuellement une étape de marquage du récipient pour associer de manière univoque le distributeur à la prescription.

Le procédé éventuellement comprenant une étape préalable à l'étape a) consistant à remplir le récipient de la quantité de produit à délivrer pendant toute la durée de traitement, à partir d'un premier conteneur pré-conditionné de grande quantité constituant un réservoir du produit de traitement.

Le produit contenu dans le récipient peut être sous forme solide, notamment poudre ou granulés, sous forme liquide, sous forme pâteuse ou sous forme gazeuse.

L'invention concerne également un premier kit de mise en oeuvre du procédé de distribution de produit à dose fixe, dans lequel un récipient contient le produit, et au moins deux doseurs à mesure fixe prédéterminée et de mesures différentes, apte à coopérer avec le récipient. Ce kit permet de délivrer, en fonction d'une prescription individuelle, une dose calibrée et reproductible du produit pendant toute la durée de la prescription individuelle.

L'invention concerne également un deuxième kit de mise en oeuvre du procédé de distribution de produit à dose fixe, comprenant un récipient constituant un réservoir du produit, et dans lequel un doseur, apte à délivrer une pluralité de doses, comprend des moyens de réglage pour sélectionner une dose, et des moyens de verrouillage définitif du réglage pour que la dose choisie soit reproduite tout au long de la prescription.

L'invention concerne également un troisième kit de mise en oeuvre du procédé de distribution de produit à dose fixe, comprenant un récipient contenant le produit, et au moins deux doseurs chacun aptes à délivrer une pluralité de mesures et comprenant des moyens de réglage pour sélectionner une dose, et des moyens de verrouillage définitif du réglage pour que la dose choisie soit reproduite tout au long de la prescription.

Selon des formes de réalisation particulières :
- le doseur réglable est monté rotatif sur le récipient et comprend :
   - un cylindre plein, de hauteur constante, présentant deux surfaces planes traversées par au moins deux passages de sections différentes ; et
   - des moyens de couplage avec le récipient ;
- le récipient comprend :
   - un réservoir muni d'une ouverture devant être en regard d'un passage du cylindre pour former le passage du produit contenu dans le réservoir ;
   - des moyens de couplage avec le doseur ;
   - une pièce à section en C montée mobile par rapport au réservoir et au cylindre, entre deux positions extrêmes dites ouverte et fermée, de part et d'autre des surfaces planes du cylindre, et munie de deux ouvertures non disposées en regard l'une de l'autre de telle sorte que, en position fermée, la première ouverture est coaxiale à un passage du cylindre alors que la seconde ouverture ne l'est pas et, en position ouverte, la seconde ouverture est coaxiale audit passage du cylindre alors que la première ouverture ne l'est pas ;
- le récipient et le doseur comprennent en liaison :
   - des moyens de rappel de la pièce en C depuis la position ouverte vers la position fermée ;
   - des moyens de fixation du cylindre par rapport au récipient pour interdire la rotation du cylindre après la sélection du passage du cylindre.
- les moyens de fixation du cylindre par rapport au récipient sont constitués par au moins une patte de fixation devant coopérer de manière irréversible avec au moins une encoche ;
- le récipient est muni d'une patte de fixation et le cylindre est muni d'une pluralité d'encoches placées de telle sorte qu'une d'entre elles coopère de manière irréversible avec la patte de fixation lorsqu'un passage du cylindre est en regard de l'ouverture du réservoir ;
- la patte de fixation présente une ligne d'affaiblissement selon laquelle la patte se casse dès qu'un effort de torsion supérieur à une valeur limite est exercé sur elle ;
- la première ouverture de la pièce à section en C présente un bord biseauté vers le cylindre ;
- la première ouverture de la pièce à section en C présente une jupe en matériau polymère saillante entre la première ouverture, le cylindre et/ou le récipient ;
- il est prévu des moyens de blocage calibrés en fonction de la prescription, pour que le distributeur se bloque à la fin du traitement ; et
- les moyens de blocage sont constitués d'au moins un mécanisme comprenant au moins une came présentant autant de dents anti-retour que de doses à délivrer pendant le traitement, et une dent d'arrêt pour le blocage définitif du distributeur après la dernière dose à délivrer.
- le kit comprend en outre un conteneur pré-conditionné de grande quantité, constituant un réservoir du produit de traitement, apte à alimenter le récipient en une quantité de produit conforme à la prescription et à la durée du traitement.

Dans le cas de la prescription d'un produit liquide, le doseur peut être, par exemple, une pipette, une seringue, une pompe ou équivalents, soit prise dans un assortiment et délivrant chacune une dose déterminée, soit réglables pouvant être bloqué pour la distribution d'une dose choisie.

Dans le cas d'un médicament, un médecin prescrit, en fonction de son diagnostic et du patient (poids, taille, âge, etc.), une quantité à délivrer, arrondie à la dose de référence la plus proche (l'arrondi pouvant également être réalisé par le pharmacien).

L'ordonnance est délivrée au patient ou à la famille du patient dans le cas d'une personne non autonome (enfant, adulte dans certain cas).

Le pharmacien traite l'ordonnance en constituant un distributeur de médicament, adapté à la prescription individuelle, à partir d'un récipient pré-conditionné contenant le médicament à une concentration donnée. Pour cela, le pharmacien détermine, en fonction de la concentration du produit de traitement, un volume correspondant à la quantité de produit nécessaire pour constituer une dose prescrite, puis il associe au récipient, un doseur délivrant un volume fixe de produit de traitement, ledit volume étant égal à celui que le pharmacien a déterminé.

Eventuellement, il marque le distributeur ainsi constitué comme correspondant au patient X, ainsi que le nombre de prise par jour.

Par exemple, si la dose de référence est de 5 mg et la prescription du médecin de 15 mg par prise, le pharmacien adapte un doseur délivrant trois fois la dose de référence à chaque utilisation. Si cela est nécessaire, le nom du patient est mentionné sur une étiquette collée sur l'ensemble conteneur /doseur. Puis le pharmacien scelle l'ensemble de telle sorte que le volume délivré ne puisse être changé ni volontairement ni par inadvertance. Dans le cas d'un enfant qui est en crèche, chez un gardien, ou dont la mère n'est pas à même d'assurer le bon dosage, l'utilisation est simple : il faut donner à l'enfant X une dose du médicament

Par exemple, la dose recommandée de l'Augmentin® (combinaison à action antibiotique d'amoxicilline trihydrate/acide clavulanique aux doses de 100 mg/12,5 mg par ml) pour un enfant est de 80 mg/kg/jour en trois prises avec une dose maximale de 3 grammes par jour. Le dosage est représenté dans le tableau suivant en fonction du poids du patient.

| **Poids du patient** | **Dose théorique** | **Prise matin** | **Prise midi** | **Prise soir** | **Dose réelle** | **Durée du Traitement** | **Volume total** |
|---|---|---|---|---|---|---|---|
| 3kg | 240 | 80 | 80 | 80 | 240 | 21 J | 5040 mg |
| 5 kg | 400 | 130 | 130 | 130 | 390 | 12 J | 4680 mg |
| 7 kg | 560 | 180 | 180 | 180 | 540 | 9 J | 4860 mg |
| 10 kg | 800 | 280 | 280 | 280 | 840 | 6 J | 5040 mg |
| 15 kg | 1200 | 380 | 380 | 380 | 1140 | 4 J | 4560 mg |
| 20 kg | 1600 | 500 | 500 | 500 | 1500 | 3 J | 4500 mg |

Au delà de ces dosages, la forme 1 g est suffisante.

Actuellement, le flacon nourrisson est de 2986 mg, et le flacon enfant de 5973 mg.

Grâce au procédé de l'invention, le fabricant peut donc prévoir un récipient unique comprenant le volume total maximum de médicament qui puisse être délivré (ici 5040 mg), et un bouchon doseur adapté à la dose prescrite.

Deux solutions sont possibles conformément à l'invention. Soit le doseur est choisi parmi une pluralité de doseurs à volume fixe différents, soit le doseur est choisi à volume réglable. Dans ce dernier cas, le pharmacien doit régler le doseur pour délivrer le volume déterminé en fonction de la concentration du produit de traitement, et correspondant à la quantité de produit nécessaire pour constituer une dose prescrite, puis verrouiller le doseur au volume déterminé pour qu'il soit reproduit tout au long de la prescription.

La responsabilité de la délivrance de la bonne dose n'est donc plus entre les mains du patient ou de l'environnement du patient qui peut ne pas bien comprendre les instructions, mais rendu à un professionnel de santé : le pharmacien.

Selon ce procédé, la concentration du produit (le médicament) est choisie par le fabricant pour être adapté à la constitution de la dose minimale qui peut être prescrite à tout utilisateur. Ainsi, le volume à délivrer est le produit de cette dose minimale et d'un multiple calculé en fonction du patient, de la fréquence et de la durée du traitement.

Le fabricant n'a donc plus à fabriquer une multitude de produits présentant des dosages différents, mais un seul produit présentant le dosage minimum. Afin de pouvoir adapter le traitement aux différents types de patient, le fabricant peut choisir de commercialiser un médicament sous différentes formulations (poudre, liquide, granules, etc), mais à un dosage unique. Ainsi, par exemple, pour un même médicament et une prescription semblable, le pharmacien peut choisir une formulation en granules pour le patient A et une formulation en poudre pour le patient B. Il adapte alors le récipient et le bouchon doseur à la formulation choisie et à la prescription.

Afin de ne pas confondre les traitements de patients différents, le pharmacien peut marquer le récipient pour associer de manière univoque le distributeur ainsi constitué à l'utilisateur à qui il est destiné.

Mais, puisque le récipient est standard, il peut contenir plus de médicaments que ce que le médecin a prescrit. Or, certains patients ont pour habitude de terminer leur médicament au-delà de la durée du traitement, ou de conserver le reste de médicament pour un usage ultérieur. La présente invention permet de s'affranchir de ces deux comportements dangereux pour la santé. Dans le but d'améliorer la sécurité du patient, il peut être prévu un dispositif de comptage des doses délivrées combiné au bouchon doseur. Ce dispositif peut être soit réglable par le pharmacien, soit pré-réglé en fonction des traitements standard. Ainsi, lorsque la dernière dose est délivrée, le dispositif bloque le distributeur. Ce dispositif de comptage et de blocage peut comprendre en outre un produit de neutralisation du médicament afin de rendre le reste de médicament inutilisable et/ou inoffensif.

Une autre application pour laquelle le procédé de l'invention est adapté est le traitement d'eau de piscine par un floculent chimiquement neutre.

Ce floculent permet aux plus fines particules en suspension dans l'eau de se grouper par attirance en formant des précipités filtrables.

En utilisation systématique, ce floculent permet d'obtenir une eau cristalline, d'éliminer les spores des algues en suspension et de réduire la durée de filtration tout en maintenant une même qualité d'eau.

Ainsi, pour une piscine standard de onze mètres par cinq mètres cinquante, le volume d'eau est de 91 m³.

Or, la présentation standard du floculent est faite sous forme de pastilles de 10 grammes et la prescription est de 1 comprimé pour 100 m³ d'eau chaque semaine. Ainsi, le propriétaire d'une piscine de 91 m³ qui devrait verser 9,1 grammes de floculent, n'a actuellement que la solution consistant à surdoser le traitement en mettant une pastille entière, ou à fragmenter le comprimé pour ne verser qu'approximativement 9,1 grammes dans l'eau.

Le fabricant ne propose pas de formats de pastilles différents adaptés aux piscines standard.

Le traitement des piscines sur mesures est tout aussi ignoré.

Selon le procédé de l'invention, tous les types de piscines peuvent être traités efficacement. Le professionnel qui vend le floculent au particulier constitue, conformément à l'invention, un distributeur de floculent adapté à la prescription spécifique de la piscine du client, à partir d'un récipient contenant le floculent à une concentration donnée. Pour cela, il détermine, en fonction de la concentration du floculent, un volume correspondant à la quantité de floculent nécessaire pour constituer une dose prescrite, puis il associe au récipient un doseur délivrant un volume fixe de floculent, ledit volume étant égal à celui qu'il a préalablement déterminé.

Ainsi, l'utilisateur n'a qu'une seule dose par semaine à verser dans sa piscine, sans se préoccuper du dosage et/ou de la quantité à verser.

L'adaptation de ce procédé à la délivrance de produits plus dangereux et/ou irritants tels que le chlore, diminue d'une part les risques sanitaires et environnementaux, dus aux surdosages ou aux sous-dosages, mais aussi les risques pour la santé des particuliers dus aux manipulations parfois aléatoires et sans protections de ces produits.

D'autres caractéristiques de l'invention seront énoncées dans la description détaillée ci-après faite en référence aux figures annexées, qui représentent respectivement :
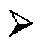 La figure 1, une vue schématique en perspective d'un kit de distribution selon l'invention comprenant un bouchon doseur réglable ;
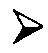 La figure 2, une vue schématique en coupe du kit de distribution de la figure 1 lors du remplissage d'une dose ;
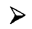 La figure 3, une vue schématique en coupe du kit de distribution de la figure 1 lors de la délivrance de la dose ;
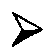 La figure 4, une vue schématique en coupe d'un kit de distribution selon l'invention comprenant un récipient et une pluralité de bouchons doseurs ; et
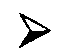 La figure 5, une vue schématique en perspective d'un bouchon doseur du kit de distribution de la figure 4.

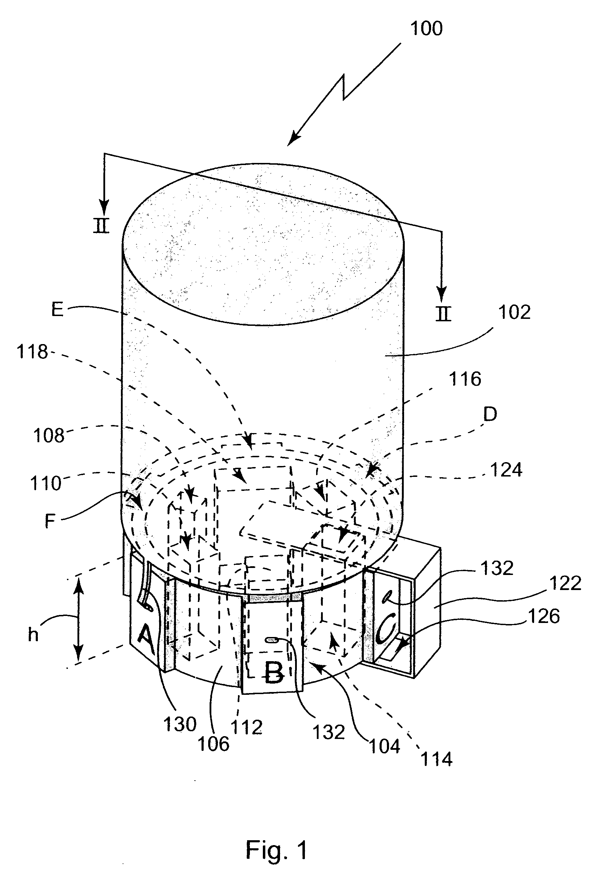

Un exemple de dispositif pour la mise en oeuvre selon l'invention est représenté dans les figures 1 à 3.

La figure 1 représente en traits pleins le contour extérieur d'un distributeur 100 de produit constitué d'un récipient 102 et d'un bouchon doseur 104, En traits pointillés apparaît la structure interne du bouchon doseur 104.

Le bouchon 104 est réglable pour délivrer plusieurs doses A, B, C, D, E et F.

Il comprend :
- un cylindre plein 106 de hauteur h constante présentant six passages de sections différentes 108, 110, 112, 114, 116, 118, et
- des moyens de couplage (non représentés) avec le récipient 102.

Ces moyens de couplage permettent au bouchon doseur 104 et au récipient 102 d'être associés l'un à l'autre de manière rotative, afin de pouvoir faire correspondre le volume choisi et l'orifice d'ouverture du récipient.

Le passage 108 présente la plus petite section et constitue, par conséquent, le volume le plus petit du bouchon doseur 104 correspondant à la dose F, la plus petite dose délivrable par le distributeur 100.

Les passages 110, 112, 114, 116 et 118 présentent des sections croissantes et le passage 118 constitue le plus grand volume du bouchon doseur 104 correspondant à la dose E la plus grande dose délivrable par le distributeur 100.

Le récipient 102 comprend :
- un réservoir muni d'une ouverture 120 devant être en regard d'un passage 114 du cylindre 106 pour le passage du produit (non représenté en figure 1) contenu dans le réservoir ;
- des moyens de couplage (non représentés en figure 1) avec le bouchon doseur 104 ;
- une pièce 122 à section en C montée radialement mobile par rapport au réservoir et au cylindre 106, entre deux positions extrêmes dites ouverte et fermée, de part et d'autres des faces d'extrémité planes du cylindre 106, et munie de deux ouvertures 124-126 non disposées en regard l'une de l'autre de telle sorte que, en position fermée, la première ouverture 124 est coaxiale à un passage du cylindre 106, alors que la seconde ouverture 126 ne l'est pas et en position ouverte, la seconde ouverture 126 est coaxiale audit passage 114 du cylindre 106 alors que la première ouverture 124 ne l'est pas.

Lorsque le pharmacien reçoit l'ordonnance, il choisit la formulation la plus appropriée pour le patient (granules, poudre, liquide) et sélectionne le récipient 102 correspondant.

Pour constituer le distributeur adapté, le pharmacien couple alors au récipient le bouchon doseur à l'aide des moyens de couplage qui peuvent être, par exemple, un pas de vis ou une baïonnette. Préférentiellement, ces moyens de couplage permettent une fixation définitive du bouchon doseur au récipient, c'est-à-dire que, si le cylindre 106 conserve toute liberté de rotation pour le réglage de la dose, ni le pharmacien, ni le patient ne peuvent séparer le bouchon 104 du récipient 102 une fois qu'ils ont été couplés.

Ceci permet de prévenir un accès au réservoir.

Une fois le bouchon 104 fixé au récipient 102, le pharmacien fait tourner le cylindre jusqu'à ce que le passage 108, 110, 112, 114, 116 ou 118 correspondant à la dose prescrite, soit situé entre les ailes de la pièce 122.

Le pharmacien active des moyens de fixation du cylindre 104 par rapport au récipient 102 pour bloquer le cylindre 109 dans la position qu'il a sélectionné.

Dans l'exemple illustré dans la figure 1, les moyens de fixation du cylindre 106 par rapport au récipient 102 sont constitués par au moins une patte de fixation 130 devant coopérer de manière irréversible avec au moins une encoche 132.

Plus précisément, le récipient 102 est muni d'une patte de fixation 130 et le cylindre 106 est muni d'une pluralité d'encoches 130 placées de telle sorte qu'une d'entre elles coopère de manière irréversible avec la patte de fixation 130 lorsque le passage sélectionné 108, 110, 112, 114, 116 ou 118 du cylindre est en regard de l'ouverture du réservoir.

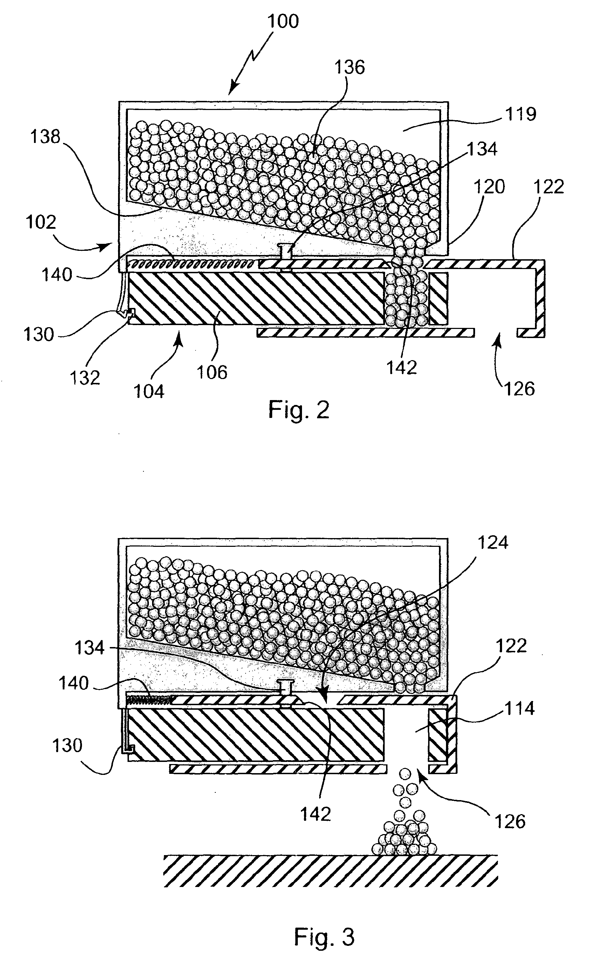

La figure 2 et 3 présentent le kit de distribution 100 de la figure 1 selon la ligne de coupe II-II.

Le récipient 102 et le bouchon doseur 104 sont associés par un axe 134 constituant un moyen de couplage permettant la rotation du cylindre 106 sans que le bouchon doseur 104 puisse être séparé du récipient 102.

Le produit 136 se présente sous forme de granules contenues dans le réservoir 119. Celui-ci présente un fond incliné 138 pour faciliter l'écoulement des granules 136 à travers l'ouverture 120.

En position fermée (figure 2), la pièce 122 est dans une position telle que sa première ouverture 124 est coaxiale à l'ouverture 120 du récipient 102.

Le pharmacien ayant réglé le bouchon doseur 104 à la dose désirée, le passage correspondant 114 du cylindre 106 se trouve en regard de l'ouverture 120.

Par conséquent, les granules 136 passent à travers les ouvertures 120 et 124 et tombent dans le passage 114.

Puisque la deuxième ouverture 126 de la pièce 122 n'est pas coaxiale à la première ouverture 124, les granules sont bloquées dans le passage 114 contre la pièce 122.

Le volume délimité par les parois de passage 114, la face supérieure du cylindre et la pièce 122 correspondent au volume de médicament 136 nécessaire pour constituer une dose prescrite.

Bien entendu, le passage 114 a été choisi arbitrairement, pour illustrer l'exemple représenté.

Pour libérer le médicament 136, le patient pousse la pièce 122 (figure 3) afin d'amener la deuxième ouverture 126 en regard du passage 114 et d'occulter l'ouverture 120 afin d'interdire l'écoulement des granules 136.

La combinaison du récipient et du bouchon doseur comprend des moyens de rappel de la pièce 122 en C depuis la position ouverte vers la position fermée. Les moyens de rappel sont ici constitués par un ressort 140.

Ainsi, le patient, en poussant la pièce 122, comprime le ressort 140.

Lorsque le médicament est entièrement libéré, le patient relâche la pièce 122 qui est ramenée dans la position de la figure 2, par la détente du ressort.

L'axe 134 étant central par rapport au cylindre 106 et au récipient 102, la pièce 122 doit comprendre, dans sa partie située entre le cylindre 106 et le récipient 102, une lumière oblongue ou une encoche pour autoriser le mouvement de la pièce 122 transversalement à l'axe 134.

Lorsque le patient pousse la pièce 122 pour libérer le médicament, cette pièce 122 interrompt la colonne de médicament située entre le fond du passage 114 et le sommet du récipient 102.

Cette interruption est effectuée de manière nette pour que le volume délivré soit constant.

Pour faciliter et augmenter la précision de cette interruption, la première ouverture 124 de la pièce 122 à section en C présente un bord biseauté 142 vers le cylindre.

Le biseau favorise la remonté des granules et évite que le dispositif soit bloqué par coincement d'un granule par exemple entre la pièce 122 et le cylindre 106.

Si le médicament se trouve sous forme de poudre, les espaces situés entre la pièce 122, le cylindre 106 et le récipient 102, risquent de favoriser les pertes de médicament puisque la poudre peut s'y glisser.

Afin de remédier à cela, la première ouverture 124 de la pièce 122 à section en C présente avantageusement une jupe en matériau polymère, saillante entre la première ouverture 124, le cylindre 106 et/ou le récipient 102.

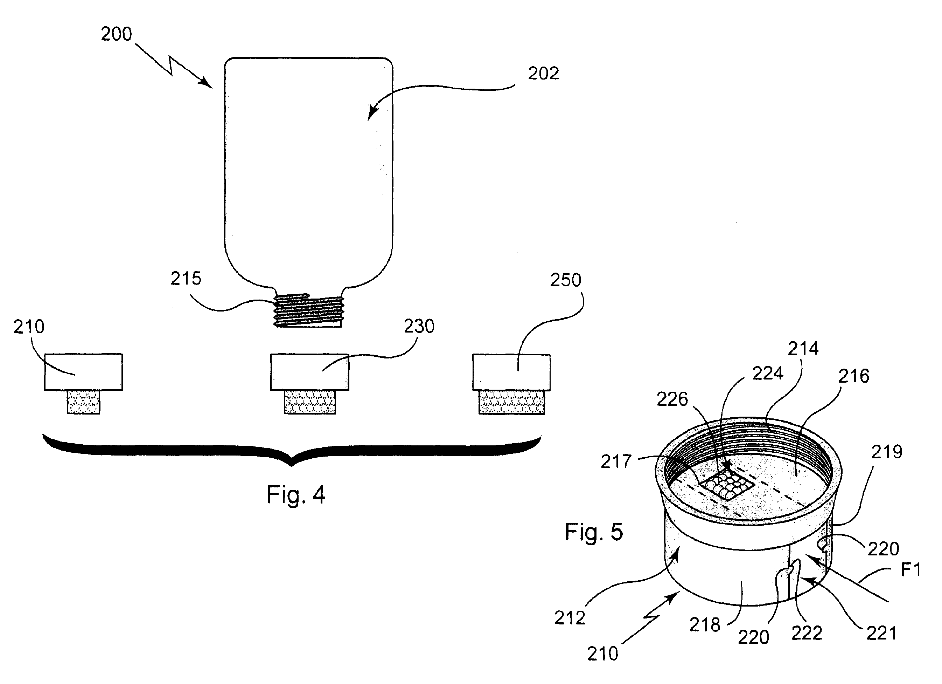

Les figures 4 et 5 présentent une variante d'un kit pour la mise en oeuvre du procédé de l'invention.

Selon cette variante, le pharmacien qui a déterminé le volume de médicament nécessaire à la constitution d'une dose, choisit non pas une position d'un bouchon réglable, mais un bouchon uni-dose parmi une pluralité.

Il faut comprendre par bouchon uni-dose, un bouchon ne permettant de délivrer qu'un seul volume pré établi, calibré et reproductible pendant toute la durée de la prescription individuelle.

Le kit 200 comprend (figure 4) un récipient 202, constituant un réservoir du produit 204 et au moins deux bouchons doseurs 210, 230, 250. Une fois que le pharmacien à choisi le bon bouchon doseur 210, celui-ci coopère de manière définitive, par des moyens de verrouillage (non représentés) avec le récipient 202 pour être adapté à délivrer, en fonction d'une prescription individuelle, une dose calibrée et reproductive du produit de traitement 204 pendant toute la durée de la prescription individuelle, l'ensemble constituant un distributeur 200 d'un produit de traitement 204.

Ainsi, après avoir choisi le bouchon doseur 210 correspondant à la dose prescrite, le pharmacien le couple au récipient 202 et active les moyens de verrouillage pour que le bouchon 210 et le récipient 202 coopèrent de manière définitive, rendant le réservoir de médicament inaccessible au patient.

Les moyens de verrouillage définitif comprennent par exemple des pattes de fixation coopérant de manière irréversible avec des fentes, ou un circlip se logeant dans une gorge ménagée dans le bouchon, ou encore un adhésif permettant de sceller le bouchon sur le récipient.

La figure 5 représente un bouchon 210 du kit de distribution 200.

Pour plus de clarté, les moyens de verrouillage n'ont pas été présentés. Le bouchon 210 comprend :
- une pièce 212 munie d'un taraudage 214 devant coopérer avec un pas de vis 215 du récipient 202, d'un fond 216 pourvu d'une ouverture 217 et de deux portions de cylindre 218 et 219 présentant chacune une saillie transversale 220 ;
- un tiroir 221 présentant deux gorges 222 longitudinales devant coopérer avec les saillies 220 pour permettre le coulissement du tiroir 221 par rapport à la pièce 212.

Le tiroir 221 comprend en outre un puit 224 ayant une contenance correspondant à une dose prescrite.

Lorsque le patient veut libérer la dose de médicament, il pousse le tiroir 221 dans le sens de la flèche F1.

Le corps du tiroir occulte l'ouverture 217 empêchant ainsi le médicament 226 de s'écouler depuis le récipient, et le puits 224 rempli de médicament 226 est déplacé en dehors du bouchon 210.

Par renversement, le patient libère la dose prescrite de médicament.

Pour refermer le bouchon, le patient repousse le tiroir 221 dans le sens inverse de la flèche F1 jusqu'à ce que les bords du tiroir soient alignés avec les bords des portions de cylindre 218, 219.

Pour plus de sûreté, un organe d'arrêt est disposé sur la pièce 212 afin d'éviter que le tiroir ne soit poussé et/ou repoussé trop loin. Selon des variantes de l'invention non représentées :
- les pattes de fixation présentent une ligne d'affaiblissement selon laquelle les pattes se cassent dès qu'un effort de torsion supérieur à une valeur limite est exercé sur elles ; Ainsi l'ouverture et/ou le dérèglement du distributeur sont définitifs et non réparables. En cassant ainsi les pattes de fixation l'utilisateur réalise une infraction et décharge le professionnel de sa responsabilité ;
- des moyens de blocage sont prévus, calibrés en fonction de la prescription de chaque volume délivré, pour que le distributeur se bloque à la fin du traitement. Les moyens de blocage sont constitués d'au moins un mécanisme comprenant au moins une came présentant autant de dents anti-retour que de doses à délivrer pendant le traitement, et une dent d'arrêt pour le blocage définitif du distributeur après la dernière dose à délivrer. Ces moyens de blocage définitif évitent un surdosage par poursuite du traitement ou une auto prescription par reprise du traitement sans prescription. Une alternative permettant d'éviter un surdosage ou un sous dosage consiste à prévoir un premier conteneur pré-conditionné de grande quantité constituant, pour le professionnel, un réservoir du produit de traitement. Ce conteneur permet de remplir par dosage volumétrique ou pondéral, en fonction des besoins, le récipient remis aux utilisateurs ou aux patients, de la quantité totale sensiblement exacte de produit à délivrer pendant toute la durée du traitement.
- le kit comprend un récipient contenant le produit de traitement, et au moins deux doseurs chacun aptes à délivrer une pluralité de doses et comprenant des moyens de réglage pour sélectionner une dose, et des moyens de verrouillage définitif du réglage pour que la dose choisie soit reproduite tout au long de la prescription.
- le kit est apte à assurer que la dose est intégralement constituée et intégralement versée. Par exemple, le distributeur est constitué d'une matière transparente telle que certains polymères thermoplastiques (par exemple le polystyrène, le polyéthylène) ou thermodurcissables. Selon une variante, le récipient peut être muni d'un fond présentant une pente prononcée avec l'horizontale afin de forcer le produit à descendre par gravité dans le doseur. Une autre possibilité est de prévoir un double système de délivrance d'une dose calibrée en prévoyant par exemple le remplissage d'une première dose, alors qu'une deuxième dose préalablement constituée est délivrée. En effet, la délivrance est nécessairement faite sensiblement à la verticale pour que le produit descende par gravité hors du distributeur. Par conséquent, dans cette position, le remplissage de la deuxième dose s'effectue de façon optimale avant que celle-ci ne soit délivrée ultérieurement.

## Revendications

1. Procédé de distribution de produit à dose fixe, à partir d'un récipient contenant le produit à une concentration donnée, **caractérisé en ce qu'**il comprend les étapes consistant à :
a) déterminer, en fonction de la concentration du produit, une mesure correspondant à la quantité de produit nécessaire pour constituer une dose prescrite; et
b) associer au récipient un doseur apte à délivrer une mesure fixe de produit de traitement, ladite mesure étant égale à celle déterminée à l'étape a).

2. Procédé selon la revendication 1, dans lequel le doseur étant à mesure fixe prédéterminée, l'étape b) du procédé comprend le choix dudit doseur parmi au moins deux doseurs de mesure différentes.

3. Procédé selon la revendication 1, dans lequel le doseur étant à mesure réglable, l'étape b) du procédé comprend les sous-étapes consistant à :
b') régler le doseur pour délivrer la mesure déterminée à l'étape a); et
b") verrouiller le doseur à la mesure déterminée.

4. Procédé selon l'une quelconque des revendications précédentes, dans lequel le doseur est un bouchon doseur.

5. Procédé selon la revendication 4, comprenant une étape de fixation définitive dudit doseur audit récipient.

6. Procédé selon l'une quelconque des revendications précédentes, comprenant en outre une étape de marquage du récipient pour associer de manière univoque le distributeur à l'utilisateur.

7. Procédé selon l'une quelconque des revendications précédentes, comprenant une étape préalable à l'étape a) consistant à remplir le récipient de la quantité de produit à délivrer pendant toute la durée de traitement, à partir d'un premier conteneur pré-conditionné de grande quantité constituant un réservoir du produit.

8. Kit de mise en oeuvre du procédé de distribution de produit selon l'une quelconque des revendications 1 à 7, **caractérisé en ce qu'**il comprend un récipient (202) contenant le produit, et au moins deux doseurs (210, 230, 250) à mesure fixe prédéterminée et de mesures différentes, aptes à coopérer avec le récipient (202).

9. Kit de mise en oeuvre du procédé de distribution de produit selon l'une quelconque des revendications 1 à 7, **caractérisé en ce qu'**il comprend un récipient (102) contenant le produit (136), et un doseur (104), apte à délivrer une pluralité de doses (A, B, C, D, E, F), comprend des moyens de réglage (106) pour sélectionner une dose, et des moyens de verrouillage définitif (130-132) du réglage pour que la dose choisie soit reproduite tout au long de la prescription.

10. Kit selon la revendication 9, dans lequel :
• le doseur réglable (104) est monté rotatif sur le récipient (102) et comprend :
- un cylindre plein (106) de hauteur (h) constante, présentant deux surfaces planes traversées par au moins deux passages (110, 112, 114, 116, 118 ) de sections différentes ; et
- des moyens de couplage (134) avec le récipient (102) ;
• le récipient (102) comprend :
- un réservoir (119) muni d'une ouverture (120) devant être en regard d'un passage (14) du cylindre (106) pour le passage du produit de traitement (136) contenu dans le réservoir ;
- des moyens de couplage (134) avec le doseur (104) ;
- une pièce à section en C (122) montée mobile par rapport au réservoir (119) et au cylindre (106), entre deux positions extrêmes dites ouverte et fermée, de part et d'autre des surfaces planes du cylindre (106), et munie de deux ouvertures (124-126) non disposées en regard l'une de l'autre de telle sorte que, en position fermée, la première ouverture (124) est coaxiale à un passage (114) du cylindre (106) alors que la seconde ouverture (126) ne l'est pas et, en position ouverte, la seconde ouverture (126) est coaxiale audit passage (114) du cylindre (106) alors que la première ouverture (124) ne l'est pas ;
• le récipient (102) et le doseur (104) comprennent en liaison :
- des moyens de rappel (140) de la pièce en C (122) depuis la position ouverte vers la position fermée ;
- des moyens de fixation (130-132) du cylindre (106) par rapport au récipient (102) pour interdire la rotation du cylindre (106) après la sélection du passage (114) du cylindre (106).

11. Kit selon la revendication 10, dans lequel les moyens de fixation du cylindre (106) par rapport au récipient (102) sont constitués par au moins une patte de fixation (130) devant coopérer de manière irréversible avec au moins une encoche (132).

12. Kit selon la revendication 11, dans lequel le récipient (102) est muni d'une patte de fixation (130) et le cylindre (106) est muni d'une pluralité d'encoches (132) placées de telle sorte qu'une d'entre elles coopère de manière irréversible avec la patte de fixation lorsqu'un passage du cylindre (106) est en regard de l'ouverture (120) du réservoir.

13. Kit selon la revendication 11, dans lequel la patte de fixation présente une ligne d'affaiblissement selon laquelle la patte se casse dès qu'un effort de torsion supérieur à une valeur limite est exercé sur elle.

14. Kit selon la revendication 10, dans lequel la première ouverture (124) de la pièce à section en C (122) présente un bord biseauté (142) vers le cylindre (106).

15. Kit selon la revendication 10, dans lequel la première ouverture (124) de la pièce à section en C (122) présente une jupe en matériau polymère saillante entre la première ouverture (124), le cylindre (106) et/ou le récipient (102).

16. Kit selon l'une quelconque des revendications précédentes, dans lequel il est prévu des moyens de blocage calibrés en fonction de la prescription pour que le distributeur se bloque à la fin du traitement.

17. Kit selon la revendication 16, dans lequel les moyens de blocage sont constitués d'au moins un mécanisme comprenant au moins une came présentant autant de dents anti-retour que de doses à délivrer pendant le traitement, et une dent d'arrêt pour le blocage définitif du distributeur après la dernière dose à délivrer.

18. Kit de mise en oeuvre du procédé de distribution de produit selon l'une quelconques des revendications 1 à 7, **caractérisé en ce qu'**il comprend un récipient contenant le produit, et au moins deux doseurs chacun aptes à délivrer une pluralité de mesures et comprenant des moyens de réglage pour sélectionner une dose, et des moyens de verrouillage définitif du réglage pour que la dose choisie soit reproduite tout au long de la prescription.

19. Kit selon l'une quelconque des revendications précédentes, comprenant en outre un conteneur pré-conditionné de grande quantité, constituant un réservoir du produit de traitement, apte à alimenter le récipient en une quantité variable de produit.

20. Distributeur de produit obtenu par combinaison d'un récipient et d'un doseur d'un kit selon l'une quelconque des revendications 8 à 19.
